# EUROPEAN PATENT SPECIFICATION

(11) **EP 3 336 989 B1**
(45) Date of publication and mention of the grant of the patent: **22.07.2020**
(21) Application number: 16204819.3
(22) Date of filing: 16.12.2016
(51) Int. Cl.: H02G 3/32

(54) **CABLE FIXATION DEVICE**
KABELFIXIERUNGSVORRICHTUNG
DISPOSITIF DE FIXATION DE CÂBLE

(43) Date of publication of application: 20.06.2018
(73) Proprietor: HellermannTyton GmbH, 25436 Tornesch (DE)
(72) Inventor: MATZ, Ole, 24850 Hüsby (DE)
(74) Representative: Manitz Finsterwald Patent- und Rechtsanwaltspartnerschaft mbB

(56) References cited:
- EP-A1- 0 459 904
- WO-A1-2012/120321
- DE-A1-102011 120 936
- DE-U1-202005 015 875
- GB-A- 973 481
- US-B2- 8 829 353

## Description

### TECHNICAL FIELD

The present invention relates to a fixation device for holding in place a bundle of electric cables and, more precisely to a positioning feature enabling several position configuration of said fixation device.

### BACKGROUND OF THE INVENTION

In a plane, a car, a boat, a building or any other structure having an electrical network, wire harnesses are routed and attached to said structure via standoff features and ties wrapped around bundles of cables. Such features comprise a leg member having a support head arranged at one end and a fixation foot at the other end. The tie attaches the cables in the support head and, the fixation foot enables to attach the assembly to the structure via means such as screws, rivets or bondage. The fixation features typically integrate heavy and costly metallic parts and, the complex routing of the harness requires several different type of said features. Lighter and easier to use devices are demanded. Examples of existing fixation devices are disclosed in documents WO2012/120321A1, US8829353B2, EP0459904A1.

### SUMMARY OF THE INVENTION

Accordingly, it is an object of the present invention to resolve the above mentioned problems in providing a fixation device for holding in place a bundle of cables onto a structure according to claim 1.

Also, said positioning feature includes a male-female engagement.

Also, said male-female engagement a comprises teeth connections.

Also, said positioning feature comprises between 10 and 30 teeth, preferably, enabling a discrete selection of 10 to 30 relative positions, preferably 16.

Also, the head member and the leg member are both plastic moulded.

Also, the fixation device further comprises a key preventing disengagement of the head member and the leg member.

Also, said key comprises an arm inserted in a key hole of the head member and engaged in a hollow arranged on the leg member.

Also, the hollow is an annular groove surrounding the leg member, the key hole being tangent to said groove so the arm registers in both the hole and the groove preventing disengagement of the head member from the leg member.

Also, the key comprises a holding portion from which extends said arm.

Also, the key is provided a snap-fit tooth adapted to engage a complementary indent feature when the key is in place in the key hole.

Also, when the key is in place the end of the arm protrudes outside the key hole, the snap-fit tooth being arranged at said protruding end of the arm to engage the edge of the opening of the key hole forming said complementary indent feature.

Also, the arm is elastically flexible and wherein, removal of the key is done by elastically bending of the arm removing the snap fit tooth from said complementary indent feature.

Also, the key comprises a second arm extending parallel to the first arm, the two arms engaging in two different key holes provided in the head member, said two holes being both parallel to each other's and tangent to the groove in diametrically opposed areas.

Also, each of the two arms is provided with a locking device, the removal of the key involving elastically bending both arms toward each other's.

Also, the key in plastic moulded.

Also, the fixation device further comprises a flexible link extending from the head member to the key.

Also, the head member, the link and the key are integrally moulded.

Also, the fixation device further comprises a tie inserted in a slot provided in the head member, or in the leg member, said tie being adapted to be looped and tightened around the bundle.

The invention extends to a method of arranging and fixing a bundle of cables on a structure, according to claim 16.

The method further comprises the following steps:
d) orienting the head member relative to the leg member in the chosen position and,
e) engaging the head member on the leg member.
g) inserting the tie in a slot provided in the head member and looping and tightening said tie around the bundle.

In an alternative, tightening the bundle at step g) may be done before the locking step f) this, should it be needed, enabling an easy re-orientation and positioning of the head member without having to unlock the assembly.

### BRIEF DESCRIPTION OF THE DRAWINGS

The present invention is now described by way of example with reference to the accompanying drawings in which:
Figures 1 and 2 are 3D views of electric cable bundles wrapped to a fixation device as per the invention.
Figures 3 and 4 present a leg member of said fixation device and a magnified view of a male half of a positioning feature.
Figures 5, 6 and 7 present a head member of said fixation device with a view on a female half of the positioning feature and of a locking key.
Figures 8 and 9 present the orientation and assembly of said fixation device.
Figures 10 and 11 present locking of said fixation device.
Figures 12, 13 and 14 present steps of a method to assemble a bundle of cables with a fixation member.
Figures 15, 16, 17 and 18 present alternative embodiments of the support members and of the leg members.
Figures 19 and 20 present a leg extension member using a similar concept as the support member.

### DESCRIPTION OF THE PREFERRED EMBODIMENTS

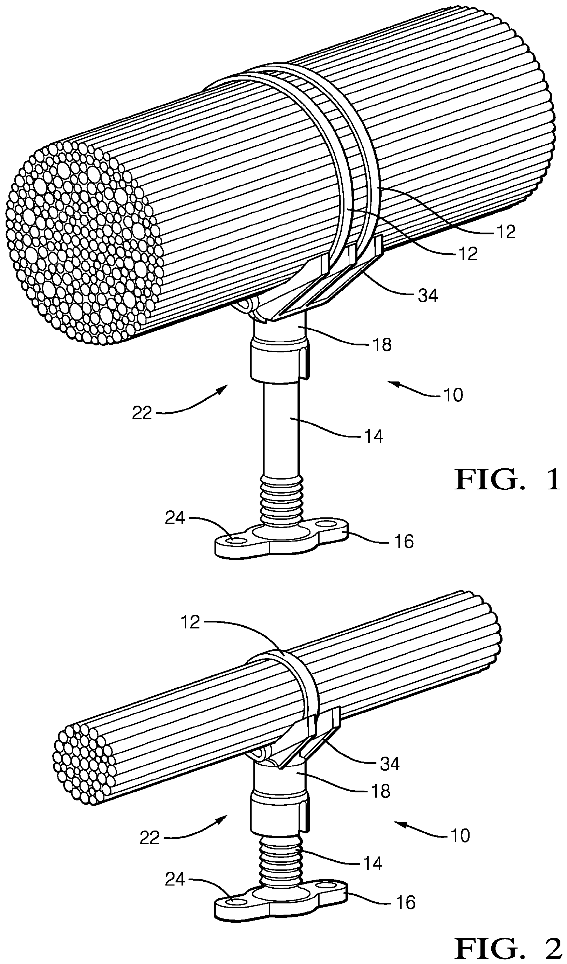

A general presentation of typical bundles wrapped and fixed to fixation devices 10 as per the invention is shown of figures 1 and 2, a large bundle requiring two ties 12 on figure 1 and, a smaller bundle requiring only one tie 12 on figure 2. The fixation devices 10 are plastic moulded and comprise a leg member 14 provided at a lower end with an integral fixation foot member 16 and with an independent head member 18 arranged at an opposite top end of the leg 14 and there fixed by a key 20.

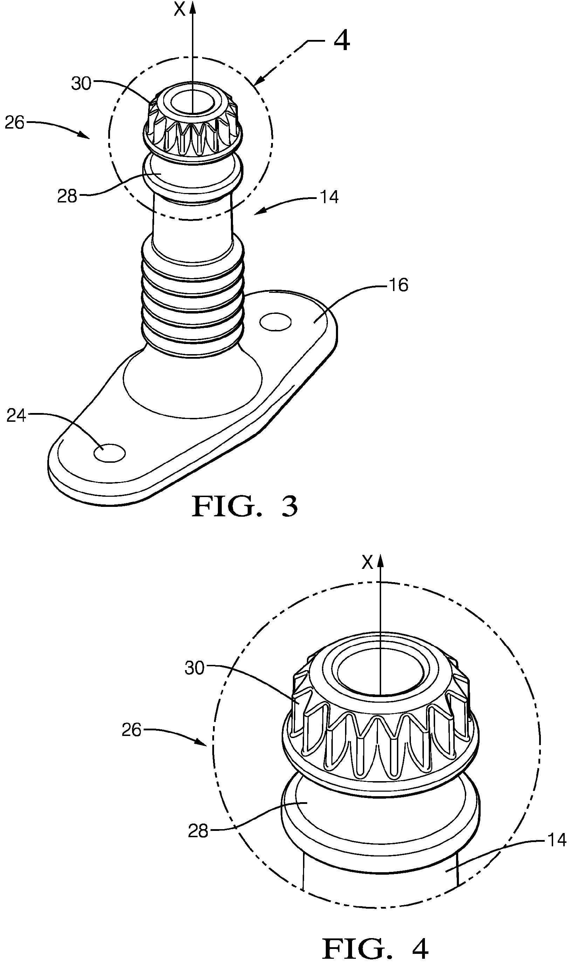

More in details in reference to the figures 3 and 4, the head 18 and leg 14 members further define together a complementary positioning feature 22 enabling orientation of the head 18 and insertion and locking onto the leg member 14.

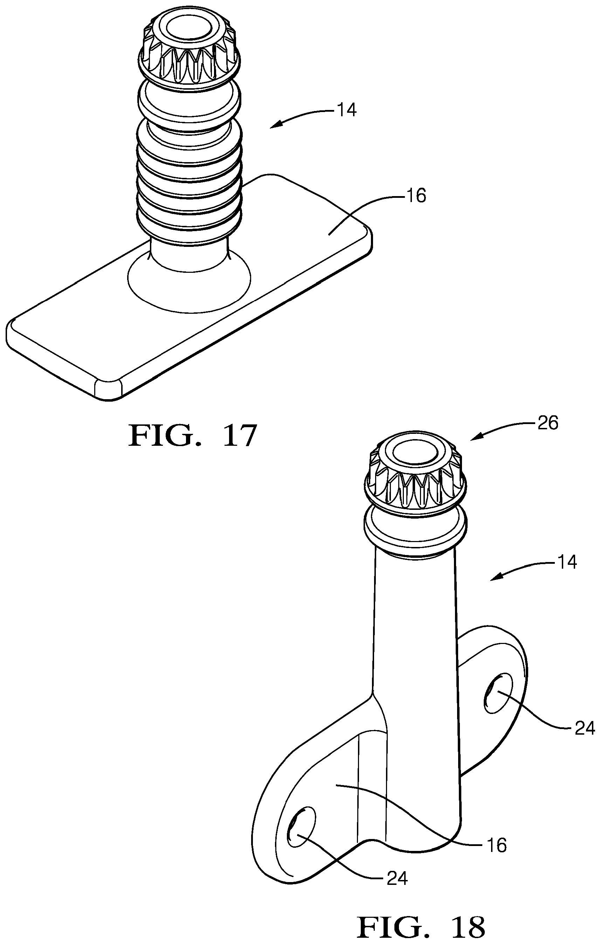

At the other end, the foot 16 is typically planar having an upper face wherefrom extends the leg 14 and an under face adapted to be arranged in surface contact against a wall of the structure. The foot 16 is provided with fixation features such as screw or rivets holes 24 or with an under face arranged for being glued onto said wall. Also, the leg 14 integrally extends from the foot 16 perpendicular, or parallel as shown on figure 18.

Using the general orientation of the figures 3 and 4, the leg 14 upwardly extends about a main axis X, in a cylindrical pillar toward a male half 26 of said positioning feature 22, said male half 26 comprising an annular groove 28 surrounding the cylindrical pillar and a male teeth wheel 30 forming the very end of said upward leg 14.

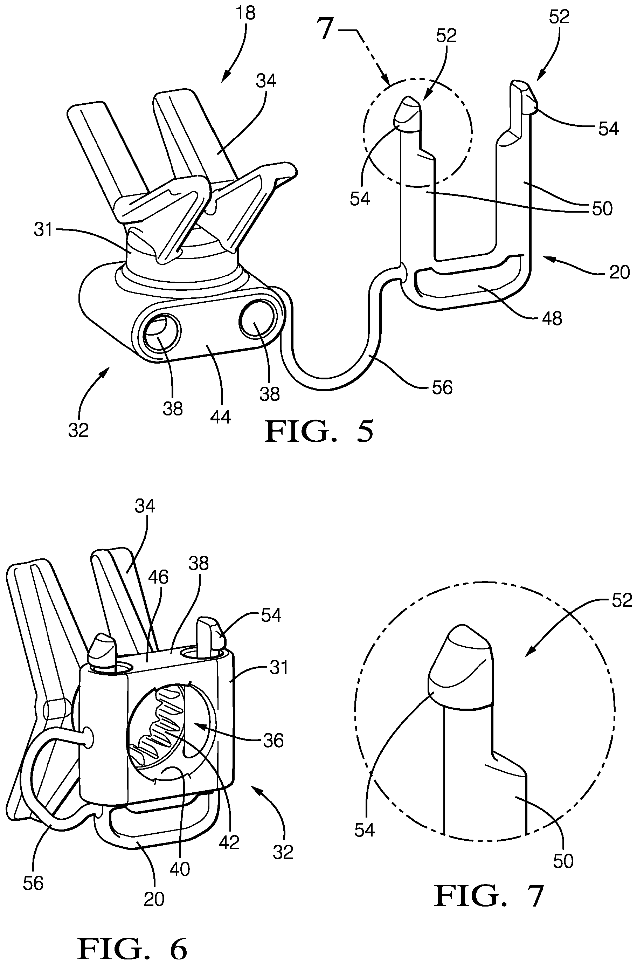

The head member 18 shown on figures 5, 6 and 7 comprises integrally moulded a body 31 defining a female half 32 of said positioning feature 22 and a bundle support feature 34 that, in the embodiments presented comprises V-like members adapted to receive the cables. Alternatively, other shapes of support features 34 U-like or O-like members exists. The female half 32 of said positioning feature 22 comprises a cylindrical recess 36 and two parallel key holes 38 defined in the body 31.

The cylindrical recess 36 comprises a smooth portion forming a female cylinder of revolution 40 arranged proximal the opening of the recess 36 in a bottom face of the body and, a toothed portion forming a female teeth wheel 42 complementary to the male teeth wheel 30 of the leg and arranged proximal the inner bottom end of the recess 36. The male 30 and female 42 wheels are complementary as having the same number of teeth, teeth having the same module, the male 30 wheel being adapted to register into the female 42 teeth.

The two key holes 38 are parallel to each other and they extend through the body perpendicular and tangent to said cylindrical recess 36. Each of the holes 38 open in a front faces 44 of the body 31 and an opposite rear face 46. Said holes 38 being tangent to the recess 36, they open in diametrically opposed area of the smooth cylinder 40.

Complementary to the key holes 38, the key 20 has U-shape comprising a holding portion 48 from the opposite ends of which two arms 50 extend parallel to each other toward a distant locking end 52. The two arms 50 having the same offset as the two key holes 38, the key 20 can be inserted therein and, as shown on the bottom view of figure 6, the locking ends 52 protrude in the rear face 46 of the body 31 and also, the middle portion of the arms 50 radially protrude in the smooth cylinder 40 of the recess 36.

Moreover, the arms 50 have a circular section up to the locking ends 52 which section is only semi-circular. Being reduced by half, said locking ends section provide resilient properties to said ends 52 which therefore can slightly bent toward each other's. The removed, or non-moulded, portions of said reduced section are the halves of the arms that are facing each other's or, that are on the "inside" of the arms. Also, each locking end 52 is provided with a tooth 54 formed at the very end of the arm 50 and magnified on figure 7, said tooth 54 outwardly protruding opposite the reduced section area and defining an abrupt shoulder 56 transition to the arm transverse to the main axis X.

The embodiment presented further comprises a flexible link 56 extending from a side face of the head member 18 to the holding portion 48 of the key 20, said link being integrally moulded with the head 18 and the key 20.

Alternatively, the fixation device could be without link, the head 18 and the key 20 being separately moulded.

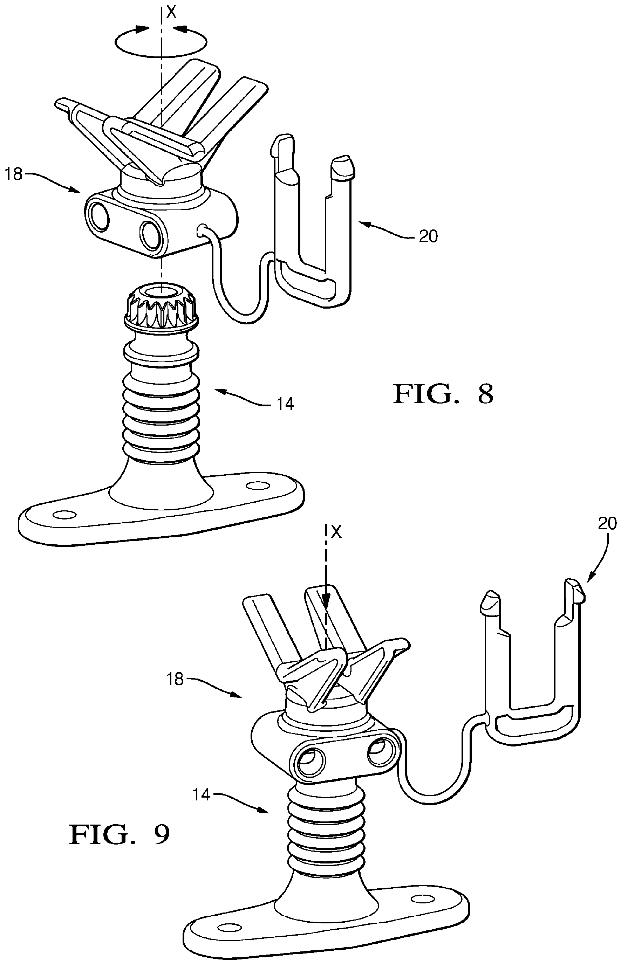

The assembly of the fixation device 10 is shown on figures 8 and 9 and is done by complementary arrangement of the head 18 over the leg 20 and more precisely by insertion of the female half 32 of the positioning feature of the head 18 over the male half 26 of the positioning feature of the leg member. Prior to the insertion of the male teeth wheel 30 into the female teeth wheel 42, as shown on figure 8, the head member 18 is angularly oriented relative to the leg 20, the increment of orientation being the number of teeth of the wheels. It has been found interesting to mould 28 teeth for an incrementing step of 13°, although a larger step of 22.5° can be obtained by moulding only 16 teeth per wheel. This orientation characteristic enables to place and fix the leg members 14 first on the wall of the structure then, arrange the head members 18 in accordance with the routing of the wire harness. Also, it enables an adjustment of the orientation of the head so that said head does not generate side forces of the wires.

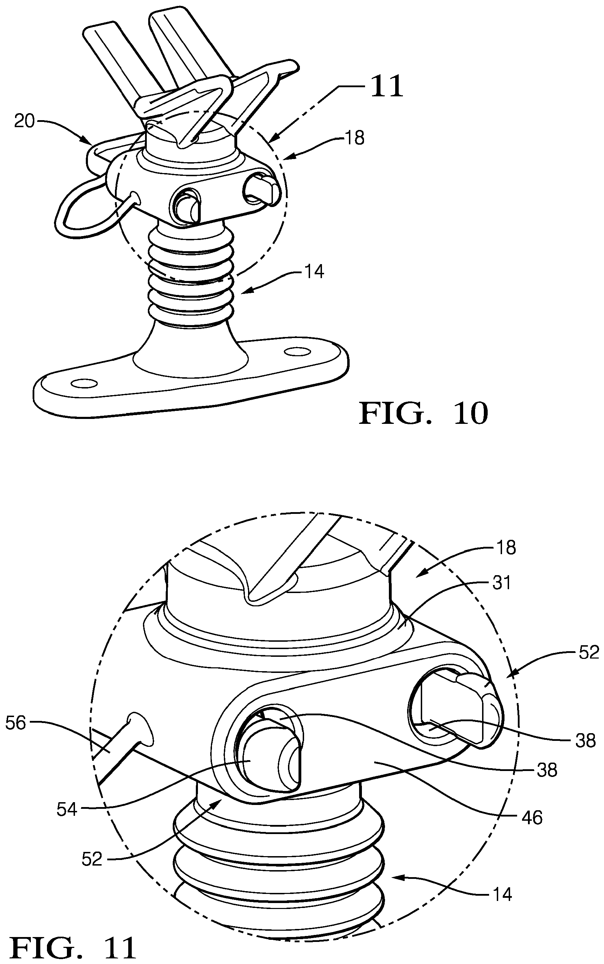

Once properly oriented, the head 18 is inserted, figure 9, on the end of the leg 14, the smooth cylinder 40 of the head facing the groove 28 below the male teeth wheel. Then the head 18 is locked in position by insertion of the arms 50 of the key 20 into the key holes 38. The middle portion of the arms 50 that radially protrudes in the smooth cylinder, indeed protrude in the groove 28 preventing axial X disengagement of the head 18. Also, the teeth 54 outwardly protruding from the arms have urged the ends 52 to slightly bend inwardly during the insertion of the arms 50 in the key holes 38 and, when said insertion is complete the teeth 54 exit the holes 38 and, the ends 52 resiliently bent back outwardly to a rest position where said teeth 54 automatically register against the edges of said holes, figures 10 and 11, on the rear face 46 of the head, thus preventing disengagement of the key 20 without a volunteer inward bending action on said key arm ends 52.

The teeth wheels enable angular orientation of the head over the leg and forbid a change in orientation; the middle of the arms protruding in the groove forbid disengagement of the head and, the key arm ends 52 lock the assembly in a single configuration. In an alternative not represented, the wheels are provided tooth-less enabling the head member 18 to angularly rotate an self adjust in the direction required.

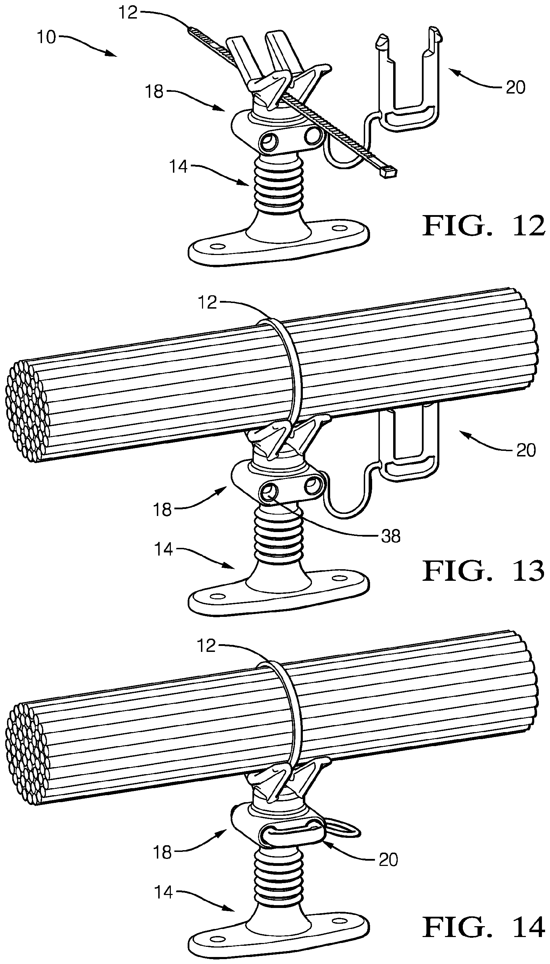

Once the harness is positioned in the bundle support features 34, the tie 12 is inserted in a slot arranged in the body 31 of the head member 18, figures 12, 13 and 14 and, said tie 12 is wrapped around the harness and tightened with a special tool not shown. In a preferred method of arrangement, the key 20 is inserted after the bundle is wrapped by a tie 12. Following this step sequence enables the user to adjust the angular orientation of the head member without having to disengage the key.

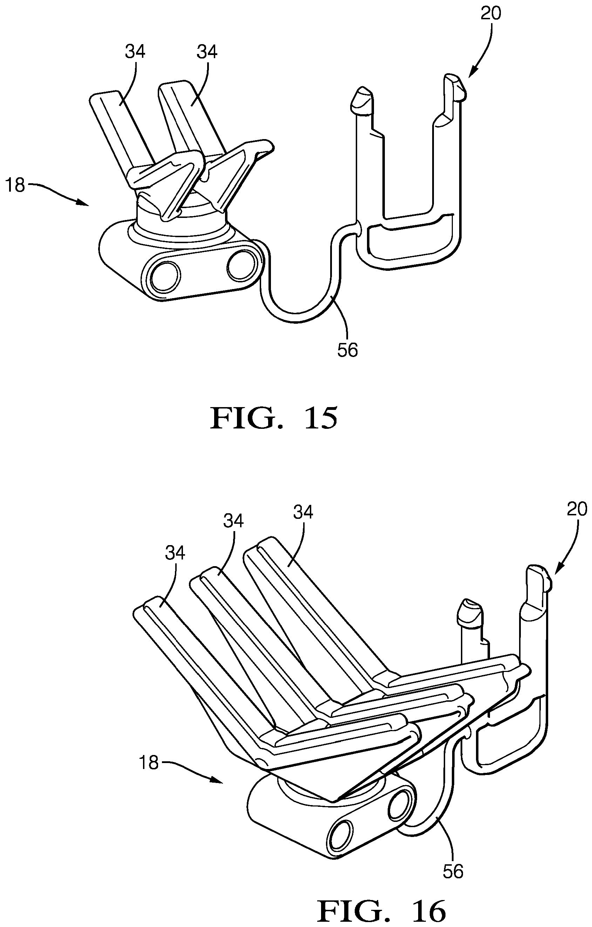

As shown on the figures 15 to 18, the positioning feature 22 can be applied on a plurality of embodiments wherein the head is provided with two or three V-like support members, using one or two ties 12, wherein the foot 16 and the leg 14 members can be coplanar or perpendicular, the leg itself being long as figure 1 or short, figure 2. To avoid damages on the cables, soft cushions are arranged on the V-like support and enable to protect the bundle from direct contact with the head member or with a sharp edge.

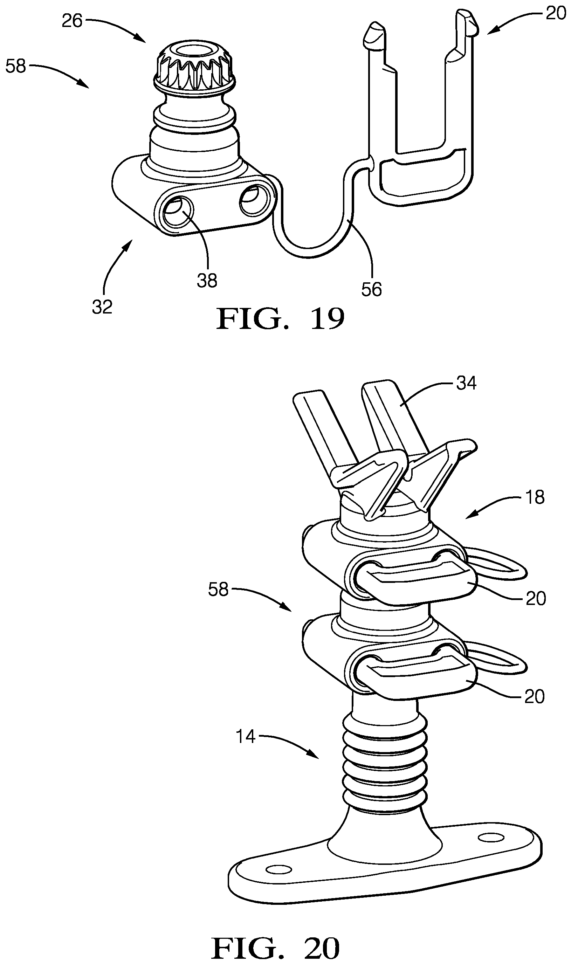

Also, as shown of figures 19 and 20, a leg extension member 58 can be made and inserted between the leg 14 and the head 18 in order to extend the height of the leg member. Such extension member 58 comprises a female half 32 of the positioning feature 22 for complementary arrangement at the end of the leg and, a male half 26 for receiving the head member 18. Integrally moulded with its own key 20, said extension member 58 is also fixed in position relative to the leg member.

### LIST OF REFERENCES

- X: main axis

- 10: fixation device
- 12: tie
- 14: leg member
- 16: foot member
- 18: head member
- 20: key
- 22: positioning feature
- 24: holes
- 26: male half of the positioning feature
- 28: hollow - groove
- 30: male teeth wheel
- 31: body of the head member
- 32: female half of the positioning feature
- 34: support feature
- 36: recess
- 38: key holes
- 40: smooth cylinder of revolution
- 42: female teeth wheel
- 44: front face of the head body
- 46: rear face of the head body
- 48: key holding portion
- 50: key arms
- 52: locking end of the arm
- 54: tooth
- 56: link
- 58: leg extension member

## Claims

1. Fixation device (10) for holding in place a bundle of cables onto a structure, said device (10) comprising a head member (18) arranged on a leg member (14), said leg member (14) extending from a fixation foot (16) for fixing the device (10) on said structure to said head member (18) for positioning and fixing said bundle,
wherein the fixation device (10) further comprises a positioning feature (22) enabling a plurality of possibilities of relative positioning of the head member (18) and the leg member (14),
wherein the leg member (14) and the head member (18) are distinct members, the positioning feature (22) further enabling complementary engagement of said distinct members,
**characterized in that** said fixation device (10) further comprises a key (20) preventing disengagement of the head member (18) and the leg member (14),
wherein said key (20) comprises an arm (50) inserted in a key hole (38) of the head member (18) and engaged in a hollow (28) arranged on the leg member (14),
wherein the hollow (28) is an annular groove (28) surrounding the leg member (14), the key hole (38) being tangent to said groove (28) so the arm (50) registers in both the hole (38) and the groove (28) preventing disengagement of the head member (18) from the leg member (14).

2. Fixation device (10) as claimed in claim 1 wherein said positioning feature (22) includes a male-female engagement.

3. Fixation device (10) as claimed in claim 2 wherein said male-female engagement comprises teeth connections.

4. Fixation device (10) as claimed in claim 3 wherein said positioning feature (22) comprises between 10 to 30 teeth, preferably 16, enabling a discrete selection of 10 to 30 relative positions, preferably 16.

5. Fixation device (10) as claimed in any one of claims 1 to 4 wherein the head member (18) and the leg member (14) are both plastic moulded.

6. Fixation device (10) as claimed in any one of claims 1 to 5 wherein the key (20) comprises a holding portion (48) from which extends said arm (50).

7. Fixation device (10) as claimed in any one of claims 1 to 6 wherein the key (20) is provided with a snap-fit tooth (54) adapted to engage a complementary indent feature when the key (20) is in place in the key hole.

8. Fixation device (10) as claimed in claim 7 wherein, when the key (20) is in place the end of the arm (50) protrudes outside the key hole (38), the snap-fit tooth (54) being arranged at said protruding end of the arm (50) to engage the edge of the opening of the key hole (38) forming said complementary indent feature.

9. Fixation device (10) as claimed in any one of claims 7 or 8 wherein the arm (50) is elastically flexible and wherein, removal of the key (20) is done by elastically bending of the arm (50) removing the snap fit tooth (54) from said complementary indent feature.

10. Fixation device (10) as claimed in any one of claims 1 to 9 wherein the key (20) comprises a second arm (50) extending parallel to the first arm (50), the two arms (50) engaging in two different key holes (38) provided in the head member (18), said two holes (38) being both parallel to each other's and tangent to the groove (28) in diametrically opposed areas.

11. Fixation device (10) as claimed in claim 10 wherein each of the two arms (50) is provided with a locking device, the removal of the key (20) involving elastically bending both arms (50) toward each other's.

12. Fixation device (10) as claimed in any one of claims 1 to 11 wherein the key (20) is plastic moulded.

13. Fixation device (10) as claimed in any one of claims 1 to 12 further comprising a flexible link (56) extending from the head member (18) to the key (20).

14. Fixation device (10) as claimed in claim 13 wherein the head member (18), the link (56) and the key (20) are integrally moulded.

15. Fixation device (10) as claimed in any one of the preceding claims further comprising a tie (12) inserted in a slot provided in the head member (18), or in the leg member (14), said tie (12) being adapted to be looped and tightened around the bundle.

16. Method of arranging and fixing a bundle of cables on a structure, said method comprising the following steps:
a) providing a fixation device (10), said device (10) comprising a head member (18) arranged on a leg member (14), said leg member (14) extending from a fixation foot (16) for fixing the device (10) on said structure to said head member (18) for positioning and fixing said bundle, wherein the fixation device (10) further comprises a positioning feature (22) enabling a plurality of possibilities of relative positioning of the head member (18) and the leg member (14), wherein the leg member (14) and the head member (18) are distinct members, the positioning feature (22) further enabling complementary engagement of said distinct members;
b) fixing the leg member (14) onto the structure via fixation means such as rivets, bondage or screws;
c) arranging the head member (18) in a chosen position relative to the leg member (14);
**characterized by** comprising the step of:
f) locking the head member (18) onto the leg member (14) by arranging a key (20) preventing disengagement of the head member (18) and the leg member (14), wherein said key (20) comprises an arm (50) inserted in a key hole (38) of the head member (18) and engaged in a hollow (28) arranged on the leg member (14), wherein the hollow (28) is an annular groove (28) surrounding the leg member (14), the key hole (38) being tangent to said groove (28) so the arm (50) registers in both the hole (38) and the groove (28) preventing disengagement of the head member (18) from the leg member (14).

17. Method as claimed in claim 16 wherein the arranging step c) comprises:
d) orienting the head member (18) relative to the leg member (14) in the chosen position and,
e) engaging the head (18) member on the leg member (14).

18. Method as claimed in claim 16 or 17, the method further comprising the following step:
g) inserting a tie (12) in a slot provided in the head member (18) and looping and tightening said tie (12) around the bundle.

19. Method as claimed in claim 18 wherein the inserting step g) is done before the locking step f).

## Patentansprüche

1. Fixierungsvorrichtung (10) zum Festhalten eines Kabelbündels auf einer Struktur, wobei die Vorrichtung (10) ein Kopfelement (18) umfasst, das auf einem Beinelement (14) angeordnet ist, wobei sich das Beinelement (14) von einem Fixierungsfuß (16) zum Fixieren der Vorrichtung (10) auf der Struktur zu dem Kopfelement (18) zum Positionieren und Fixieren des Bündels erstreckt,
wobei die Fixierungsvorrichtung (10) ferner ein Positionierungsmerkmal (22) umfasst, das eine Vielzahl von Möglichkeiten zur relativen Positionierung des Kopfelements (18) und des Beinelements (14) ermöglicht,
wobei das Beinelement (14) und das Kopfelement (18) separate Elemente sind, wobei das Positionierungsmerkmal (22) ferner einen komplementären Eingriff der separaten Elemente ermöglicht,
**dadurch gekennzeichnet, dass** die Fixierungsvorrichtung (10) ferner einen Schlüssel (20) umfasst, der das Trennen des Kopfelements (18) von dem Beinelement (14) verhindert,
wobei der Schlüssel (20) einen Arm (50) umfasst, der in ein Schlüsselloch (38) des Kopfelements (18) eingeführt ist und in einen Hohlraum (28) eingreift, der an dem Beinelement (14) angeordnet ist,
wobei der Hohlraum (28) eine ringförmige Rille (28) ist, die das Beinelement (14) umgibt, wobei das Schlüsselloch (38) tangential zu der Rille (28) verläuft, sodass der Arm (50) sowohl in das Loch (38) als auch in die Rille (28) einrastet, wodurch das Trennen des Kopfelements (18) von dem Beinelement (14) verhindert wird.

2. Fixierungsvorrichtung (10) nach Anspruch 1, wobei das Positionierungsmerkmal (22) einen Stecker-Buchsen-Eingriff umfasst.

3. Fixierungsvorrichtung (10) nach Anspruch 2, wobei der Stecker-Buchsen-Eingriff Zahnverbindungen umfasst.

4. Fixierungsvorrichtung (10) nach Anspruch 3, wobei das Positionierungsmerkmal (22) zwischen 10 und 30 Zähne, vorzugsweise 16, umfasst, wodurch eine diskrete Wahl von 10 bis 30 Relativpositionen, vorzugsweise 16, ermöglicht wird.

5. Fixierungsvorrichtung (10) nach einem der Ansprüche 1 bis 4, wobei das Kopfelement (18) und das Beinelement (14) beide aus Kunststoff geformt sind.

6. Fixierungsvorrichtung (10) nach einem der Ansprüche 1 bis 5, wobei der Schlüssel (20) einen Halteabschnitt (48) umfasst, von dem aus sich der Arm (50) erstreckt.

7. Fixierungsvorrichtung (10) nach einem der Ansprüche 1 bis 6, wobei der Schlüssel (20) mit einem Einrastzahn (54) versehen ist, der angepasst ist, um in ein komplementäres Verzahnungsmerkmal einzugreifen, wenn der Schlüssel (20) in dem Schlüsselloch platziert ist.

8. Fixierungsvorrichtung (10) nach Anspruch 7, wobei, wenn der Schlüssel (20) platziert ist, das Ende des Arms (50) aus dem Schlüsselloch (38) nach außen vorsteht, wobei der Einrastzahn (54) an dem vorstehenden Ende des Arms (50) angeordnet ist, um mit dem Rand der Öffnung des Schlüssellochs (38) in Eingriff zu treten, der das komplementäre Verzahnungsmerkmal bildet.

9. Fixierungsvorrichtung (10) nach einem der Ansprüche 7 oder 8, wobei der Arm (50) elastisch verbiegbar ist und wobei das Entfernen des Schlüssels (20) durchgeführt wird, indem der Arm (50) elastisch gebogen wird, wodurch der Einrastzahn (54) von dem komplementären Verzahnungsmerkmal entfernt wird.

10. Fixierungsvorrichtung (10) nach einem der Ansprüche 1 bis 9, wobei der Schlüssel (20) einen zweiten Arm (50) umfasst, der sich parallel zu dem ersten Arm (50) erstreckt, wobei die beiden Arme (50) in zwei unterschiedliche Schlüssellöcher (38) eingreifen, die in dem Kopfelement (18) bereitgestellt sind, wobei die zwei Löcher (38) beide parallel zueinander sind und tangential zu der Rille (28) in diametral entgegengesetzten Bereichen verlaufen.

11. Fixierungsvorrichtung (10) nach Anspruch 10, wobei jeder der beiden Arme (50) mit einer Verriegelungsvorrichtung versehen ist, wobei das Entfernen des Schlüssels (20) ein elastisches Verbiegen von beiden Armen (50) aufeinander zu beinhaltet.

12. Fixierungsvorrichtung (10) nach einem der Ansprüche 1 bis 11, wobei der Schlüssel (20) aus Kunststoff geformt ist.

13. Fixierungsvorrichtung (10) nach einem der Ansprüche 1 bis 12, die ferner eine flexible Verbindung (56) umfasst, die sich von dem Kopfelement (18) zu dem Schlüssel (20) erstreckt.

14. Fixierungsvorrichtung (10) nach Anspruch 13, wobei das Kopfelement (18), die Verbindung (56) und der Schlüssel (20) als ein Stück geformt sind.

15. Fixierungsvorrichtung (10) nach einem der vorstehenden Ansprüche, ferner umfassend ein Band (12), das in eine Nut eingeführt ist, die in dem Kopfelement (18) oder in dem Beinelement (14) bereitgestellt ist, wobei das Band (12) angepasst ist, um um das Bündel herumgeschlungen und festgezogen zu werden.

16. Verfahren zum Anordnen und Fixieren eines Kabelbündels auf einer Struktur, wobei das Verfahren die folgenden Schritte umfasst, dass:
a) eine Fixierungsvorrichtung (10) bereitgestellt wird, wobei die Vorrichtung (10) ein Kopfelement (18) umfasst, das auf einem Beinelement (14) angeordnet ist, wobei sich das Beinelement (14) von einem Fixierungsfuß (16) zum Fixieren der Vorrichtung (10) auf der Struktur zu dem Kopfelement (18) erstreckt, um das Bündel zu positionieren und zu fixieren, wobei die Fixierungsvorrichtung (10) ferner ein Positionierungsmerkmal (22) umfasst, das eine Vielzahl von Möglichkeiten einer relativen Positionierung des Kopfelements (18) und des Beinelements (14) ermöglicht, wobei das Beinelement (14) und das Kopfelement (18) separate Elemente sind, wobei das Positionierungsmerkmal (22) ferner einen komplementären Eingriff der separaten Elemente ermöglicht;
b) das Beinelement (14) mithilfe von Fixierungsmitteln wie etwa Nieten, Verklebungen oder Schrauben auf der Struktur fixiert wird;
c) das Kopfelement (18) in einer gewählten Position relativ zu dem Beinelement (14) angeordnet wird;
**dadurch gekennzeichnet, dass** es den Schritt umfasst, dass:
f) das Kopfelement (18) an dem Beinelement (14) verriegelt wird, indem ein Schlüssel (20) angeordnet wird, der das Trennen des Kopfelements (18) und des Beinelements (14) verhindert, wobei der Schlüssel (20) einen Arm (50) umfasst, der in ein Schlüsselloch (38) des Kopfelements (18) eingeführt wird und in einen Hohlraum (28) eingreift, der an dem Beinelement (14) angeordnet ist, wobei der Hohlraum (28) eine ringförmige Rille (28) ist, die das Beinelement (14) umgibt, wobei das Schlüsselloch (38) tangential zu der Rille (28) verläuft, sodass der Arm (50) sowohl in das Loch (38) als auch in die Rille (28) einrastet, wodurch ein Trennen des Kopfelements (18) von dem Beinelement (14) verhindert wird.

17. Verfahren nach Anspruch 16, wobei der Schritt c) des Anordnens umfasst, dass:
d) das Kopfelement (18) relativ zu dem Beinelement (14) in der gewählten Position ausgerichtet wird und,
e) das Kopfelement (18) an dem Beinelement (14) in Eingriff gebracht wird.

18. Verfahren nach Anspruch 16 oder 17, wobei das Verfahren ferner den folgenden Schritt umfasst, dass:
g) ein Band (12) in eine Nut eingeführt wird, die in dem Kopfelement (18) vorgesehen ist, und das Band (12) um das Bündel herumgeschlungen und festgezogen wird.

19. Verfahren nach Anspruch 18, wobei der Schritt g) des Einführens vor dem Schritt f) des Verriegelns durchgeführt wird.

## Revendications

1. Dispositif de fixation (10) pour tenir en place un faisceau de câbles sur une structure, ledit dispositif (10) comprenant un élément formant tête (18) agencé sur un élément formant jambe (14), ledit élément formant jambe (14) s'étendant depuis un pied de fixation (16) destiné à fixer le dispositif (10) sur ladite structure audit élément formant tête (18) pour positionner et fixer ledit faisceau,
dans lequel le dispositif de fixation (10) comprend en outre un moyen de positionnement (22) permettant une pluralité de possibilités de positionnement relatif de l'élément formant tête (18) et de l'élément formant jambe (14),
dans lequel l'élément formant jambe (14) et l'élément formant tête (18) sont des éléments distincts, le moyen de positionnement (22) permettant en outre un engagement complémentaire desdits éléments distincts,
**caractérisé en ce que** ledit dispositif de fixation (10) comprend en outre une clé (20) qui empêche désengagement de l'élément formant tête (18) et de l'élément formant jambe (14),
dans lequel ladite clé (20) comprend un bras (50) inséré dans un trou à clé (38) de l'élément formant tête (18) et engagée dans un creux (28) ménagé sur l'élément formant jambe (14),
dans lequel le creux (28) est une gorge annulaire (28) entourant l'élément formant jambe (14), le trou à clé (38) étant tangent à ladite gorge (28) de telle sorte que le bras (50) s'aligne à la fois dans le trou (38) et dans la gorge (28) en empêchant un désengagement de l'élément formant tête (18) vis-à-vis de l'élément formant jambe (14).

2. Dispositif de fixation (10) selon la revendication 1, dans lequel ledit moyen de positionnement (22) inclut un engagement mâle/femelle.

3. Dispositif de fixation (10) selon la revendication 2, dans lequel ledit engagement mâle/femelle comprend des connexions à dents.

4. Dispositif de fixation (10) selon la revendication 3, dans lequel ledit moyen de positionnement (22) comprend entre 10 et 30 dents, de préférence 16, permettant une sélection discrète de 10 à 30 positions relatives, de préférence 16.

5. Dispositif de fixation (10) selon l'une quelconque des revendications 1 à 4, dans lequel l'élément formant tête (18) et l'élément formant jambe (14) sont tous les deux moulés en matière plastique.

6. Dispositif de fixation (10) selon l'une quelconque des revendications 1 à 5, dans lequel la clé (20) comprend une portion de maintien (41) depuis laquelle s'étend ledit bras (50).

7. Dispositif de fixation (10) selon l'une quelconque des revendications 1 à 6, dans lequel la clé (20) est dotée d'une dent d'encliquetage (54) adaptée pour engager un élément de cran complémentaire lorsque la clé (20) est en place dans le trou à clé.

8. Dispositif de fixation (10) selon la revendication 7, dans lequel, lorsque la clé (20) est en place, l'extrémité du bras (50) se projette à l'extérieur du trou à clé (38), la dent d'encliquetage (54) étant agencée au niveau de ladite extrémité en projection du bras (50) pour engager le bord de l'ouverture du trou à clé (38) en formant ledit élément de cran complémentaire.

9. Dispositif de fixation (10) selon l'une quelconque des revendications 7 ou 8, dans lequel le bras (50) est élastiquement flexible et dans lequel un enlèvement de la clé (20) est effectué en cintrant élastiquement le bras (50) en enlevant la dent d'encliquetage (54) hors dudit élément de cran complémentaire.

10. Dispositif de fixation (10) selon l'une quelconque des revendications 1 à 9, dans lequel la clé (20) comprend un second bras (50) s'étendant parallèlement au premier bras (50), les deux bras (50) s'engageant dans deux trous à clé différents (38) prévus dans l'élément formant tête (18), lesdits deux trous (38) étant tous les deux parallèles l'un à l'autre et tangents à la gorge (28) dans des zones diamétralement opposées.

11. Dispositif de fixation (10) selon la revendication 10, dans lequel chacun des deux bras (50) est doté d'un dispositif de blocage, l'enlèvement de la clé (20) impliquant l'opération consistant à cintrer élastiquement les deux bras (50) en direction l'un de l'autre.

12. Dispositif de fixation (10) selon l'une quelconque des revendications 1 à 11, dans lequel la clé (20) est moulée en matière plastique.

13. Dispositif de fixation (10) selon l'une quelconque des revendications 1 à 12, comprenant en outre une liaison flexible (56) s'étendant depuis l'élément formant tête (18) jusqu'à la clé (20).

14. Dispositif de fixation (10) selon la revendication 13, dans lequel l'élément formant tête (18), la liaison (56) et la clé (20) sont moulés de manière intégrale.

15. Dispositif de fixation (10) selon l'une quelconque des revendications précédentes, comprenant en outre un lien (12) inséré dans une fente ménagée dans l'élément formant tête (18) ou dans l'élément formant jambe (14), ledit lien (12) étant adapté à être mis en boucle et à être serré autour du faisceau.

16. Procédé pour agencer et fixer un faisceau de câbles sur une structure, ledit procédé comprenant les étapes suivantes consistant à :
a) fournir un dispositif de fixation (10), ledit dispositif (10) comprenant un élément formant tête (18) agencé sur un élément formant jambe (14), ledit élément formant jambe (14) s'étendant depuis un pied de fixation (16) destiné à fixer le dispositif (10) sur ladite structure audit élément formant tête (18) afin de positionner et de fixer ledit faisceau, dans lequel le dispositif de fixation (10) comprend en outre un moyen de positionnement (22) permettant une pluralité de possibilités de positionnement relatif de l'élément formant tête (18) et de l'élément formant jambe (14), dans lequel l'élément formant jambe (14) et l'élément formant tête (18) sont des éléments distincts, le moyen de positionnement (22) permettant en outre un engagement complémentaires desdits éléments distincts ;
b) fixer l'élément formant jambe (14) sur la structure via des moyens de fixation tels que des rivets, des collages ou des vis ;
c) agencer l'élément formant tête (18) dans une position choisie par rapport à l'élément formant jambe (14) ;
**caractérisé en ce qu'**il comprend les étapes consistant à :
f) bloquer l'élément formant tête (18) sur l'élément formant jambe (14) en agençant une clé (20) empêchant un désengagement de l'élément formant tête (18) et de l'élément formant jambe (14), dans lequel ladite clé (20) comprend un bras (50) inséré dans un trou à clé (38) de l'élément formant tête (18) et engagé dans un creux (28) agencé sur l'élément formant jambe (14), dans lequel le creux (28) est une gorge annulaire (28) qui entoure l'élément formant pied (14), le trou à clé (38) étant tangent à ladite gorge (28) de telle sorte que le bras (50) s'aligne à la fois dans le trou (38) et dans la gorge (28) en empêchant un désengagement de l'élément formant tête (18) vis-à-vis de l'élément formant jambe (14).

17. Procédé selon la revendication 16, dans lequel l'étape d'agencement c) comprend :
d) l'orientation de l'élément formant tête (18) par rapport à l'élément formant jambe (14) dans la position choisie, et
e) l'engagement de l'élément formant tête (18) sur l'élément formant jambe (14).

18. Procédé selon les revendications 16 ou 17, le procédé comprenant en outre l'étape suivante :
g) insérer un lien (14) dans une fente ménagée dans l'élément formant tête (18) et faire une boucle en serrant ledit lien (12) autour du faisceau.

19. Procédé selon la revendication 18, dans lequel l'étape d'insertion (g) est terminée avant l'étape de blocage (f).
